# EUROPEAN PATENT SPECIFICATION

(11) **EP 0 478 491 B1**
(45) Date of publication and mention of the grant of the patent: **14.12.1994**
(21) Application number: 91610078.7
(22) Date of filing: 18.09.1991
(51) Int. Cl.: G01G 21/24, G01G 23/00

(54) **A weighing apparatus with a weighing plate guided by a parallelogram system**
Wiegevorrichtung mit einer durch ein Parallelogrammsystem geführten Wiegeplatte
Dispositif de pesage avec un plateau guidé par un système à parallélogramme

(30) Priority: 25.09.1990 DK 2311/90
(43) Date of publication of application: 01.04.1992
(73) Proprietor: SCANVAEGT A/S, DK-8200 Aarhus N (DK)
(72) Inventor: Jensen, Hugo, DK-8220 Brabrand (DK)
(74) Representative: Skoett-Jensen, Knud

(56) References cited:
- EP-A- 0 015 323
- EP-A- 0 171 539
- EP-A- 0 188 997
- EP-A- 0 224 991
- FR-A- 2 112 216
- GB-A- 2 100 382

## Description

The present invention relates to a weighing apparatus of the type, for example, such as that described in EP-A-0 224 991, in which a weighing plate is supported by a carrier structure upstanding from a carrier beam, which is supported on a weighing cell and is parallelly guided in the vertical direction in being secured to one end of a lying parallelogram system, the opposite end of which is fixed to a portion of a rigid apparatus chassis. The parallelogram system, in principle consisting of an upper and a lower plate arm at either end of the carrier beam, these plate arms at their respective opposite ends being vertically pivotally connected with the carrier beam and the said chassis, respectively, has the task of stabilizing and guiding the carrier beam in a frictionless manner by its short operative displacement between its unloaded and fully loaded positions. Also, the parallelogram system should serve to ensure that an off-centered load on the weighing plate will not result in a correspondingly wry load on the weighing cell, likely to compromise the weighing accuracy.

This latter circumstance has led to a traditional attitude of such systems, apart from the pivotal connections at the ends of the parallelogram arms, having to be 'stiff', that is very stiff, in order to avoid any kind of torsion of the system. For this reason, inter alia, care is taken that the parallelogram arms are rigidly interconnected by means of an upper and a lower cross plate between their respective end portions adjacent the carrier beam, whereby torsions are counteracted.

In connection with the present invention the correctness of this traditional principle is strongly questioned. No doubt, the weighing system shall have to be reasonably torsion stiff, but it should be taken into account, also, that a pronounced stiff system will present quite considerable drawbacks in connection with weighing systems that are treated not too leniently. Practice has shown that in the production of weighing systems for industrial use it shall be anticipated that many of the units, in use, will be subjected to undesired overloadings and strong impacts as well as pronounced off-centered loadings, and in particular the impacts may give rise to the weighing cell being influenced so as to get out of calibration. It is particularly unlucky if an impact influence is off-centered, since this may well cause a noticeable wryness of the influence on the weighing cell, despite the provided stiffness of the system, and so the desired advantages of the stiff system can be effectively lost by the weighing cell after such an influence giving generally wrong measuring results.

It is well known that it is possible to avoid a long during overloading of the weighing cell, simply by providing the rigid chassis with a fixed stop abutment for the downward displacement of the weighing plate, such that the weighing cell cannot be nominally overloaded; however, in connection with impact loads there are transferred dynamic pressure waves that may be of high intensity, regardless of the presence of such a stop arrangement.

In connection with the invention use is still made of such a depression stop, preferably arranged at each corner of the weighing plate, but additionally there is provided for a combination of (a) the direction of the depression force on the weighing cell being made independent of the weighing beam assuming a slightly oblique position, and (b) the parallelogram system being only partly stiff, i.e. designed with a certain degree of resiliency, such that a small degree of torsion will be possible when impact loads occur - and even when the weighing plate is loaded in an off-centered manner. Such a torsion wryness may be acceptable, when the load is transferred to the weighing cell through a flexible wire, as the wryness will not then influence the direction of the pressure on the weighing cell.

As will appear from the following it is well possible to arrange for further protection measures for the weighing cell, but already the noticeable torsion resiliency in the weighing system itself will condition a pronounced damping of the mechanical noise signal as reaching the weighing cell in response to an impact load.

It is recognized in advance that it is difficult to indicate a measure for the desired resiliency or any specific distinguishing between the invention and the prior art systems, which have of course not been totally stiff, in the absolute sense of this word. It has been found possible, however, to express the invention by an objective criterion, viz. based on the use of the said depression stop means for the weighing plate. The positioning or adjustment of these stops should be rather accurate, because they shall allow for a full operative displacement of the weighing plate, but only very little more than that, as their protective effect will otherwise be limited. For a given scale a given pressure will be required for pressing down a corner of the weighing plate into abutment with the respective depression stop, and for the traditional systems it will be noticed that such an off-centered depression will result in a practically pure parallel depression of the weighing plate, this being the conventional ideal. In connection with the invention there are similar conditions for the adjustment of the depression stops, but the desired resiliency should be so pronounced that a full depression of one corner of the weighing plate will leave the other corners in openly non-depressed condition; all according to the detailed design these other corners may move slightly downwardly or stand still or even move a little upwardly, but it will be beyond doubt that they do not at all follow the depressed corner. This effect is not a desired goal as such, but it is a consequence of the desired character of the weighing system.

In connection with the invention new parallelogram elements exhibiting accurately determined twisting abilities have been developed, resulting in the said parallelogram plate arms with associated connector plate portions now being made in one piece of a suitable metal plate having a width as large as practically possible, i.e. designed with a relatively large distance between the plate parts representing the said plate arms. In the production of the apparatus these plate units will be easy to mount, as they shall not be assembled from several parts, and besides they can be manufactured with a relatively small weight, such that the weighing apparatus can be rapid-acting.

Moreover, in connection with the invention almost an entirely new type of scale design has been developed, characterized by a very 'clean' construction, not only of the parallelogram plates, such that generally there will be bad conditions for a depositing of impurities that can not be discovered or removed reasonably easily, this being of particular importance for the many weighing units used in the food industry.

In the following the invention is described in more detail with reference to the drawing, in which:-
Fig. 1 is a perspective view of the basic parts of a weighing apparatus according to the invention, and
Fig. 2 is a perspective detailed view of the transfer area between the weighing system and an associated weighing cell.

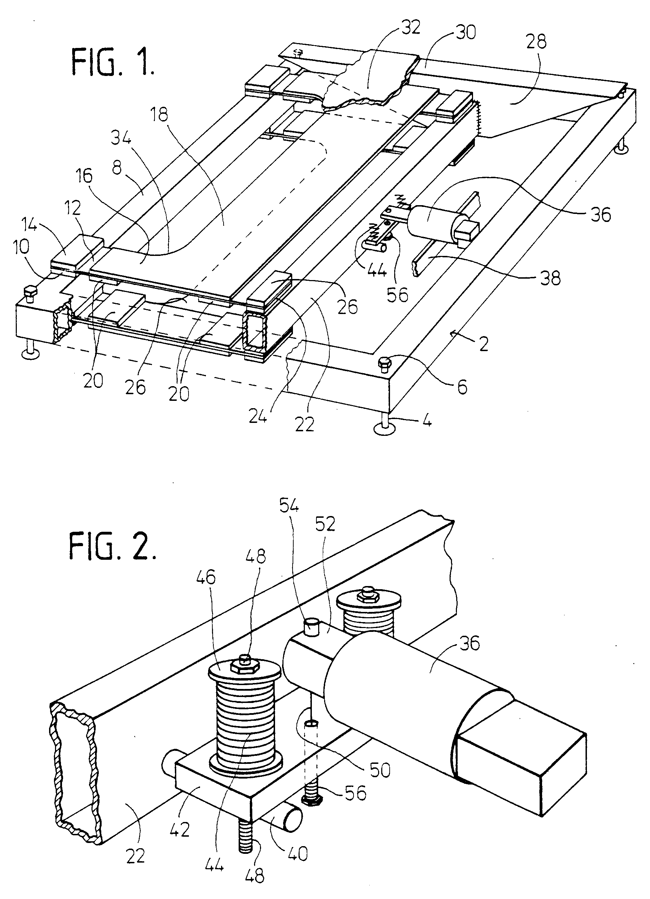

The weighing apparatus shown in Fig. 1 is built up based on a base frame 2 consisting of stainless rectangular tube members fully welded at the frame corners, such that the interior frame cavity is completely closed. Thereby the frame is made as a hygienic and very torsion stiff element. At its corners the frame is provided with adjustable support feet 4 and with upper, adjustable depression stop members 6 for an overlying, non-illustrated weighing plate.

At one side member 8 of the frame 2 there is mounted, at both ends thereof and both at its top and bottom sides, a mounting platen 10, secured by welding and having a finely worked surface, serving as a mounting base for a so-called flexure, that is a flexible strip member 12 secured to the platen 10 in being spanner clamped between the latter and an outer clamping member 14. The upper strip members 12 extend inwardly along the undersides of respective plate arm portions 16 of an upper parallelogram plate 18, and they are secured to the outer ends of these plate arm portions by means of spanner pieces 20. The strip members 12 continue along the underside of the plate 18 to the opposite edge area of this plate, to which they are again secured, likewise by means of spanner pieces 20, and further to respective top side areas of a transverse carrier beam 22, where the free strip ends are secured by clamping between mounting platens 24 welded to the beam 22 and outer spanner pieces 26. In a corresponding manner the lower strip members 12 are secured to a lower parallelogram plate 26 and furthermore to the underside of the beam 22.

When carrying out short vertical movements the beam 22, consisting of a rectangular tube piece, will thus be guided for parallel-displacement by means of the parallelogram plates 18 and 26 and the vertically flexible strip connections 12.

The opposite ends of the beam 22 project slightly beyond the connecting areas of the strips 12, and they are each welding connected with an upstanding bracket plate 28, of which only one is shown. These plates 28 are located freely outside the lateral edges of the parallelogram plates 18,26 and inside the inner sides of the adjacent lateral legs of the base frame 2. The plates 28 are upwardly diverging, almost to the full width of the base frame, and at the top they terminate in an outwardly bent flange portion 30 projecting over the adjacent leg of the base frame and far enough to both sides of the beam 22 to have their opposite ends projecting over the depression stops 6. The flange portions at the opposed ends of the beam 22 serve to support an overlying weighing plate 32, illustrated by a fraction only. Due to the parallel-guiding of the beam 22 this weighing plate may thus be moved slightly up and down without any change of its horizontal orientation.

The parallelogram plates 18 and 26 are each made in one piece, as a plate member having an outer recess shaped with rounded corners 34 at the transition to the outer plate arm portions 16; these roundings are important for achieving a well controlled resiliency of the plates 18 and 26.

The beam 22 is supported against or by the outer end of a weighing cell 36, which is rigidly secured to the base frame 2 and additionally supported by a transverse carrier beam 38 rigidly held by the base frame 2. Thus, a load on the weighing plate 32 will be transferred as a pressure on the outer end of the weighing cell, whereby the weight of the load can be determined in an otherwise conventional manner.

As far as the superior principal design of the disclosed weighing system is concerned there is nothing new in this system, but on the detailed level it is both novel and highly advantageous that the parallelogram plates 18 and 26 are provided as non-stiffened elements, which will thus behave with a certain noticeable resiliency with associated twisting possibilities. Also, it is untraditional and advantageous that the base frame 2 is provided as a fully welded, closed tubular frame, without hiding places for impurities, and even that the beam 22 is a closed tube, closed by the bracket plates 28 being welded directly onto the ends of this tube. The parallelogram plates 18 and 26 being made as unitary plate members involves avoidance of quite a few traditional bolt joints, this contributing to giving the entire device a 'clean' appearance and making it easy to produce.

The connection between the beam 22 and the weighing cell 36 is shown in more detail in Fig. 2. On the beam 22 is mounted a pair of horizontally projecting, cylindrical pins 40, which support at their top sides the opposed end portions of a lying piece of flat steel 42. This piece is held biased against the pins by means of compression springs 44, each rested at the top against a top disc 46 on an upstanding bolt 48 projecting through a hole in the flat steel 42 and a hole in the underlying pin 40; the bolt may be screwed into the latter hole, when it is threaded, or the bolt may have a nut engaging the bottom side of the pin 40. By these means the springs 44 are compressed so hard that the pressure of the flat steel 42 against the pins 40 is slightly higher than the maximum weighing pressure to be transferred from the beam 22 to the weighing cell.

The latter pressure transfer takes place as a pull transfer, inasfar as underneath the the central part of the flat steel 42 there is mounted one end of a draw-stiff, but flexible wire 50 stretching upwards through a hole in the flat steel and through a hole in the outer end portion 52 of the weighing cell, the wire above this hole being rigidly provided with a widened wire head 54. At the lower end a wire head can be received in a screw bushing 56, which can be screwed more or less up into the hole in the flat steel, such that the effective wire length can be adjusted.

When the beam 22 is forced downwardly the associated force will be transferred as a pulling force through the wire 50 to the outer end of the weighing cell, as the flat steel 42 will normally be in firm engagement with the pins 40, and by such a pull the weighing cell will produce an analogous weighing signal through a non-illustrated wire connection with an indicating or registrating unit. In case of an impactwise or steady overload the pull in the wire 50 will be so high that it supersedes the compression force of the springs 44, whereby these will yield and get further compressed, such that the the flat steel 42 will be raised from the pins 40. Thus, the pins 40 may then, together with the beam 22, be displaced further downwardly without bringing along the end portion 52 of the weighing cell, which will thus be protected against harmful downward deflection.

The yieldable connection between the carrier beam 22 and the weighing cell 36 via the flexible wire 50 may be established otherwise, e.g. already by avoiding one of the springs 44 and in stead fixing the relevant end of the flat steel 42 in a pivotal manner to the associated pin 40, for example rigidly to a rotatably arranged pin. Alternatively there may be arranged on the top of the weighing cell end portion 52 a prestressed compression spring, in the upper end of which the wire 50 is suspended, while at the lower end the wire is connected with the carrier beam in a pull-stiff manner; also hereby the spring will yield , when the load supersedes the preadjusted spring bias. In and with the force to the weighing cell being transferred through the flexible wire 50 it will be secured that for the weighing result it is immaterial whether the beam assumes a slightly inclined position as a consequence of an off-centered loading of the weighing plate 32. The same result could be obtained by the carrier beam resting itself directly on the outer end of the weighing cell with the use of a non-illustrated pivot knife connection, but in that case there would be no dynamically yielding connection in case of impact-like influences on the weighing plate.

It is characteristic for the invention that the distance between the opposed parallelogram arms 16 is endeavoured to be as large as possible, such that the resiliently twistable connector plate portion 18 can be as long as possible. When the scale, as shown, is of a rectangular shape having opposed long and short sides, respectively, the parallelogram arms 16 should preferably extend along the narrow sides. These arm portions may well have a length larger than half the length of the shorter sides.

Finally it should be repeated that for the scale according to the invention it is important that the weighing plate 32 or rather the underside of the underlying carrier flanges 30 for this plate should be depressible at each corner so as to engage the relevant depression stop 6, without the movable system being so stiff that also the other corners will generally participate in this movement, this conditioning the desired resiliency of the system.

## Claims

1. A weighing apparatus of the type in which a weighing plate (32) is supported by a carrier structure upstanding from a carrier beam (22), which is supported on a weighing cell (36) and is parallel-guided in the vertical direction in being secured to one end of a lying parallelogram system (8, 18, 22, 28), the opposite end of which is pivotally secured to a rigid apparatus chassis (2), which is additionally provided with depression stop means (6) for limiting the lowering of the weighing plate corresponding to a permissible maximum load on the weighing plate (32), said parallelogram system comprising plate shaped parallelogram arms (16) and respective, transversely arranged connector plate portions (18, 26) between the ends of these arms which face the carrier beam, characterized in that the parallelogram system is designed with opposed full plate elements, each forming in an integral manner both the parallelogram arms and the associated connector plate portion in one piece, and in that these fullplate elements are designed so as to exhibit a noticeable twisting resiliency in a manner such that any local edge area of the weighing plate can be depressed into engagement with the closest depression stop (6) therefor, without the weighing plate (32) thereby concurrently being moved into engagement with the remaining depression stop means.

2. A weighing apparatus according to claim 2, in which the carrier bead (22) is rested on the weighing cell (36) via a transfer system, which permits the transfer of a purely vertical pressure on the weighing cell (36) irrespectively of the carrier beam assuming an inclined position.

3. A weighing apparatus according to claim 1, in which the carrier beam (22) rests on the weighing cell (36) via a flexible transfer arrangement, which permits a strong dynamic depression of the carrier beam without the cooperating part of the weighing cell being subjected to a corresponding depression.

4. A weighing apparatus according to claims 2 and 3, in which the carrier beam (22) is supported by the free end of a flexible weighing cell (36) in being suspended therein by means of a flexible wire (50), this connection comprising spring means (44) which will yield by occurring dynamical influences superseding the nominal maximum transfer force between the carrier beam (22) and the weighing cell (36).

5. A weighing apparatus according to claim 1, in which the parallelogram arm plates are are designed with smoothly rounded inner corners at the transition between the parallelogram arm portions (16) and the connector plate portions (18, 26) therebetween.

6. A weighing apparatus according to claim 1, in which, in addition to the clean joints formed in an integral manner between the parallelogram arm portions and their connector plate portions, the apparatus is designed with further clean construction parts such as a fully welded chassis frame of closed tube profiles and a tubular carrier beam closed at both ends, all preferably of stainless materials.

7. A weighing apparatus according to claim 1 and designed with a rectangular base shape with sides of uneven lengths, in which the parallelogram arm plate portions (16) extend along the opposed short sides of the base shape, as close to these as possible.

## Patentansprüche

1. Eine Wiegevorrichtung von der Art, bei der eine Wiegeplatte (32) von einer von einem Tragbalken (22) hochstehenden Tragkonstruktion gestützt ist, wobei der Tragbalken auf einer Wägezelle (36) getragen und in senkrechter Richtung parallelgeführt ist, indem er an einem Ende eines liegenden Parallelogranmsystems (8, 18, 22, 28) befestigt ist, während dessen gegenüberliegendes Ende schwenkbar an einem steifen Vorrichtungsgrundrahmen (2) befestigt ist, der zusätzlich mit Absenkanschlagmitteln (6) zur Begrenzung des Absenkens der Wiegeplatte (32) entsprechend einer zulässigen Höchstlast auf der Wiegeplatte ausgerüstet ist, wobei das Parallelogrammsystem plattenförmige Parallelogrammarme (16) und jeweils transversal angeordnete Verbindungsplattenteile (18, 26) zwischen den Enden dieser Arme, die dem Tragbalken zugekehrt sind, umfaßt, **dadurch gekennzeichnet**, daß das Parallelogrammsystem aus gegenüberliegenden Vollplattenelementen aufgebaut ist, die jeweils auf integrale Art sowohl die Parallelogrammarme als auch das zugehörige Verbindungsplattenteil in einem Stück bilden, und daß diese Vollplattenelemente so ausgelegt sind, daß sie eine merkliche Verdrehungsnachgiebigkeit in einer Weise hervorbringen, daß jeder lokale Randbereich der Wiegeplatte zum Eingriff mit dem dazu nächstliegenden Absenkanschlag (6) niedergedrückt werden kann, ohne daß die Wiegeplatte (32) dadurch gleichzeitig in Eingriff mit den übrigen Absenkanschlagmitteln bewegt wird.

2. Eine Wiegevorrichtung nach Anspruch 2, bei der der Tragbalken (22) auf der Wägezelle (36) über ein Übertragungssystem aufgelagert ist, das die Übertragung eines reinen Vertikaldruckes auf die Wägezelle (36) unabhängig davon, ob der Tragbalken eine geneigte Lage einnimmt, erlaubt.

3. Eine Wiegevorrichtung nach Anspruch 1, bei der der Tragbalken (22) auf der Wägezelle (36) über eine flexible Übertragungsanordnung auflagert, die ein starkes dynamisches Absenken des Tragbalkens erlaubt, ohne daß der kooperierende Teil der Wägezelle einer entsprechenden Absenkung unterworfen wird.

4. Eine Wiegevorrichtung nach Ansprüchen 2 und 3, bei der der Tragbalken (22) durch das freie Ende einer flexiblen Wägezelle (36) gestützt ist, indem er daran mittels eines flexiblen Drahtes (50) aufgehängt ist, wobei diese Verbindung Federmittel (44) umfaßt, die beim Auftreten dynamischer Einflüsse nachgeben die die nominelle Höchstübertragungskraft zwischen dem Tragbalken (22) und der Wägezelle (36) überlagern.

5. Eine Wiegevorrichtung nach Anspruch 1, bei der die Parallelogramm-Armplatten mit weich abgerundeten inneren Ecken am Übergang zwischen den Parallelogrammarmteilen (16) und den Verbindungsplattenteilen (18, 26) dazwischen ausgebildet sind.

6. Eine Wiegevorrichtung nach Anspruch 1, bei der die Vorrichtung, zusätzlich zu den in integraler Weise gebildeten glatten Verbindungen zwischen den Parallelogrammarmteilen und ihren Verbindungsplattenteilen, mit weiteren glatten Konstruktionselementen, wie zum Beipiel einem voll geschweißten Chassisrahmen aus geschlossenen Rohrprofilen und einem rohrförmigen, an beiden Enden geschlossenen Tragbalken, die alle vorzugsweise aus nicht rostendem Material bestehen, ausgebildet ist.

7. Eine Wiegevorrichtung nach Anspruch 1 und in rechteckiger Grundform mit Seiten ungleicher Länge ausgebildet, bei der sich die Parallelogramm-Armplatten (16) entlang der gegenüberliegenden kurzen Seiten der Grundform so nah wie möglich zu diesen erstrecken.

## Revendications

1. Appareil de pesage du type dans lequel un plateau de pesage (32) est supporté par une structure de support érigée à partir d'une poutre de support (22), qui est supportée sur une cellule de pesage (36) et guidée parallèlement dans la direction verticale en étant fixée à une extrémité d'un système de parallélogramme étendu (8,18,22,28), dont l'extrémité opposée est fixée de façon pivotante à un châssis rigide de l'appareil (2), qui est de plus muni de moyens d'arrêt à dépression (6) pour limiter l'abaissement du plateau de pesage correspondant à une charge maximale permise sur le plateau de pesage (32), ledit système de parallélogramme comprenant des bras de parallélogramme en forme de plaque (16) et des portions de plaque de connexion agencées transversalement (18,26) entre les extrémités de ces bras qui font face à la poutre de support,
caractérisé en ce que le système de parallélogramme est conçu avec des éléments de plaque pleins opposés, chacun formant, d'une façon intégrante, à la fois les bras de parallélogramme et la portion de plaque de liaison associée en une pièce, et en ce que ces éléments de plaque pleins sont conçus de façon à présenter une élasticité à la torsion notable de telle manière que toute zone marginale locale du plateau de pesage peut être abaissé en engagement avec la butée de dépression la plus proche (6) pour celle-ci, sans que le plateau de pesage (32) soit ainsi déplacé de façon concourante en engagement avec les moyens de butée à dépression restants.

2. Appareil de pesage selon la revendication 2, dans lequel la poutre de support (22) repose sur la cellule de pesage (36) via un système de transfert, qui permet le transfert d'une pression purement verticale sur la cellule de pesage (36) indépendamment du fait que la poutre de support prend une position inclinée.

3. Appareil de pesage selon la revendication 1, dans lequel la poutre de support (22) repose sur la cellule de pesage (36) via un agencement de transfert souple, qui permet une forte dépression dynamique de la poutre de support sans que la partie coopérante de la cellule de pesage soit soumise à une dépression correspondante.

4. Appareil de pesage selon les revendications 2 et 3, dans lequel la poutre de support (22) est supportée par l'extrémité libre d'une cellule de pesage souple (36) en y étant suspendue au moyen d'un fil métallique souple (50), cette liaison comprenant des moyens formant ressort (44) qui agiront lors de l'occurrence d'influences dynamiques excédant la force de transfert maximale nominale entre la poutre de support (22) et la cellule de pesage (36).

5. Appareil de pesage selon la revendication 1, dans lequel les plaques des bras du parallélogramme sont conçues avec des coins internes doucement arrondis au niveau de la transition entre les portions des bras de parallélogramme (16) et les portions de plaque de liaison (18,26) entre elles.

6. Appareil de pesage selon la revendication 1, dans lequel, en plus des joints formés d'une façon intégrante entre les portions des bras du parallélogramme et leurs portions de plaque de liaison, l'appareil est muni d'autres pièces de construction, telles qu'un châssis totalement soudé de profilés tubulaires fermés et une poutre de support tubulaire fermée à ses deux extrémités, tous de préférence en des matières inoxydables.

7. Appareil de pesage selon la revendication 1 et conçu avec une forme de base triangulaire présentant des côtés de longueurs inégales, dans lequel les portions des plaques des bras du parallélogramme (16) s'étendent le long des côtés courts opposés de la forme de base, aussi près de ceux-ci que possible.
